# EUROPÄISCHE PATENTSCHRIFT

(11) **EP 1 665 581 B1**
(45) Veröffentlichungstag und Bekanntmachung des Hinweises auf die Patenterteilung: **02.06.2010**
(21) Anmeldenummer: 04766647.4
(22) Anmeldetag: 31.08.2004
(51) Int. Cl.: H04B 7/06

(54) **VERFAHREN ZUR DATENÜBERTRAGUNG IN ABHÄNGIGKEIT VOM ZEITLICHEN VERLAUF DER PILOTSIGNALE AN EINE EMPFANGENDE STATION**
METHOD FOR DATA TRANSMISSION TO A RECEIVING STATION ACCORDING TO THE TEMPORAL COURSE OF THE PILOT SIGNALS
PROCEDE DE TRANSMISSION DE DONNEES A UNE STATION RECEPTRICE EN FONCTION DE LA CARACTERISTIQUE TEMPORELLE DES SIGNAUX PILOTES

(30) Priorität: 17.09.2003 DE 10343068
(43) Veröffentlichungstag der Anmeldung: 07.06.2006
(73) Patentinhaber: Nokia Siemens Networks GmbH & Co. KG, 81541 München (DE)
(72) Erfinder: BREITBACH, Johannes, Markus, 89075 Ulm (DE); DIETRICH, Hans, 89075 Ulm (DE)
(86) Internationale Anmeldenummer: PCT/EP2004/051965
(87) Internationale Veröffentlichungsnummer: WO 2005/029727

(56) Entgegenhaltungen:
- WO-A-03/063526
- US-A- 3 717 814
- US-B1- 6 359 864
- "UNIVERSAL MOBILE TELECOMMUNICATIONS SYSTEM (UMTS);PHYSICAL LAYER PROCEDURES(FDD) (3GPP TS 25.214 VERSION 3.4.0 RELEASE 1999)" September 2000 (2000-09), ETSI TS 125 214 V3.4.0, XX, XX, PAGE(S) 1-48 , XP002166612 Seite 31 - Seite 38

## Beschreibung

Die Erfindung betrifft ein Verfahren zur Datenübertragung von einer sendenden Station an eine empfangende Station in einem Funkkommunikationssystem sowie eine entsprechende sendende Station.

Mobilfunkkanäle sind charakterisiert durch das Phänomen der Mehrwegeausbreitung. Dies bedeutet, dass sich ein von einer Sendeantenne abgestrahltes Funksignal, d. h. ein auf eine elektromagnetische Welle aufmoduliertes Signal, auf verschiedenen Wegen von der Sende- zu einer Empfangsantenne ausbreitet. Es treffen somit mehrere elektromagnetische Wellen, die jeweils das Signal tragen, bei einem Empfänger ein und durch Laufzeitunterschiede auf den verschiedenen Wegen tritt, je nach Ort des Empfängers, konstruktive oder destruktive Interferenz der elektromagnetischen Wellen auf. Es bildet sich somit ein stationäres Funkfeld mit Orten mit besonders guter Empfangsbedingung einerseits und Funklöchern (Fadinglöchern) andererseits aus. Je nach Aufenthaltsort können Teilnehmerstationen daher gut, schlecht oder sogar überhaupt nicht versorgt werden.

Wenn, wie in Mobiltelefonsystemen üblich, sich der Empfänger gegenüber dem Funkfeld bewegt, sind zur Lösung dieses Problems verschiedene Methoden bekannt: Bei kleinen Geschwindigkeiten (∼<10km/h) kann eine schnelle Sendeleistungsregelung verwendet werden. Bei höheren Geschwindigkeiten kann die Auswirkung von Funklöchern durch Interleaving (Verschachtelung) von zu übertragenden Daten ausgeglichen werden. Diese beiden Methoden werden beispielsweise in Mobilfunksystemen gemäß dem GSM- (Global System for Mobile Communications) oder dem UMTS-(Universal Mobile Telecommunications System) Standard verwendet.

Dokument US63598641 offenbart eine CDMA-Übertragungseinheit mit einer Vielzahl von Antennen, wobei über die unterschiedlichen Antennen unterschiedliche Pilotsignale übertragen werden. Ein CDMA-Empfänger verfügt über eine Einheit, um Antennenkontrollsignale an die CDMA-Übertragungseinheit zu senden, wobei die Antennenkontrollsignale von Empfangsleistungswerten der empfangenen Pilotsignale abhängen.

Sollen jedoch sehr langsame oder sogar unbewegliche Teilnehmerstationen, z.B. tragbare Computer, Daten empfangen, so können die zuvor genannten Methoden nicht angewendet werden. Bei einer im UMTS-Standard vorgesehenen Datenübertragung, die als HSDPA (High Speed Downlink Packet Access) bezeichnet wird, sollen jedoch insbesondere langsame und unbewegliche Teilnehmerstationen mit hohen Datenraten versorgt werden. Dazu vermessen alle Teilnehmerstationen einer Funkzelle ihren Funkkanal und melden die Messwerte an die die Funkzelle versorgende Basisstation. Eine in der Basisstation befindliche Planungsfunktionalität sorgt dann dafür, dass gezielt denjenigen Teilnehmerstationen Funkressourcen zugeteilt werden, die einen besonders guten Funkkanal haben. Teilnehmerstationen, die sich dauerhaft in einem Funkloch aufhalten, werden auf diese Weise quasi von der Funkversorgung ausgeschlossen, während Teilnehmerstationen mit einer geringen Qualität ihres Funkkanals seltener eine Funkressource zugeteilt bekommen als Teilnehmerstationen mit einer guten Qualität ihres Funkkanals. Es kommt somit zu einer ungleichmäßigen Verteilung der für HSDPA verwendeten Funkressourcen. Die zuvor erwähnten Methoden zur Sicherstellung einer Funkübertragung (Sendeleistungsregelung und Interleaving) greifen nicht, da eine schnelle Sendeleistungsregelung für HSDPA nicht vorgesehen ist und im Algemeinen nur geringe Teilnehmergeschwindigkeiten vorkommen.

Der Erfindung liegt daher die Aufgabe zugrunde, ein vorteilhaftes Verfahren zur Datenübertragung von einer sendenden Station an eine empfangende Station in einem Funkkommunikati-onssystem sowie eine sendende Station anzugeben, mit denen verhindert werden kann, dass stationäre Teilnehmerstationen von einer Funkversorgung ausgeschlossen werden und mit denen sichergestellt werden kann, dass eine gleichmäßige Verteilung von Teilnehmerstationen auf verfügbare Funkressourcen erfolgt.

Diese Aufgabe wird mit dem Verfahren sowie der sendenden Station gemäß den unabhängigen Ansprüchen gelöst.

Vorteilhafte Weiterbildungen der Erfindung sind Gegenstand der abhängigen Ansprüche.

Bei dem erfindungsgemäßen Verfahren zur Datenübertragung von einer sendenden Station an eine empfangende Station in einem Funkkommunikationssystem verwendet die sendende Station eine Antennenvorrichtung, die ein elektromagnetisches Feld mit einer sich zeitlich ändernden Feldstärke am Ort der empfangenden Station erzeugt, und legt für eine Datenübertragung in Abhängigkeit von dem zeitlichen Verlauf der Feldstärke am Ort der empfangenden Station einen Sendezeitpunkt fest, zu dem sie Daten an die empfangende Station überträgt.

Die sendende Station kann durch Erzeugen eines zeitlich variierenden elektromagnetischen Feldes sicherstellen, dass am Ort der empfangenden Station kein permanentes Funkloch auftritt. Weiterhin kann die sendende Station den Sendezeitpunkt derart festlegen, dass die übertragenen Daten zu einem Zeitpunkt bei der empfangenden Station eintreffen, zu dem eine möglichst große Feldstärke am Ort der empfangenden Station vorliegt. Sind mehrere empfangende Stationen in einem Funkversorgungsbereich der sendenden Station vorhanden, so kann selbstverständlich an jedem Ort ein sich zeitlich änderndes Feld erzeugt werden und daher allen empfangenden Stationen individuell ein Sendezeitpunkt zugewiesen werden, der einen jeweiligen Datenempfang mit hoher Feldstärke, d. h. hoher Qualität, ermöglicht. Da für alle empfangenden Stationen eine zwischen einem minimalen und einem maximalen Wert variierende Feldstärke erzeugt werden kann, gibt es für alle empfangenden Stationen Zeitpunkte, zu denen an ihrem Ort eine hohe Feldstärke vorliegt. Funkressourcen, beispielsweise für HSDPA verwendete Funkkanäle, können daher gleichmäßig auf alle Teilnehmerstationen in dem Funkversorgungsbereich verteilt werden.

Den zeitlichen Verlauf am Ort der empfangenden Station kennt die sendende Station beispielsweise aufgrund der verwendeten Sendeleistung in Verbindung mit der bekannten geografischen Lage der empfangenden Station sowie den Eigenschaften der möglichen Ausbreitungswege der elektromagnetischen Wellen, die das elektromagnetische Feld am Ort der empfangenden Station erzeugen. In der sendenden Station ist beispielsweise eine anhand von Messungen oder theoretischen Modellen ermittelte Zuordnungsvorschrift bekannt, mit der die sendende Station jeder Sendeleistung eine Feldstärke am Ort der empfangenden Station (bei anderen Ausführungsformen der Erfindung unter Umständen auch an jedem Ort ihres Funkversorgungsbereichs) zuordnen kann.

In einer vorteilhaften Weiterbildung der Erfindung empfängt die sendende Station vor der Datenübertragung von der empfangenden Station wenigstens eine Information, anhand derer sie den zeitlichen Verlauf der Feldstärke abschätzt. Eine in der sendenden Station vorab bekannte Zuordnungsvorschrift ist dann zur Schätzung des zeitlichen Verlaufs der Feldstärke nicht mehr erforderlich. Der zeitliche Verlauf wird stattdessen anhand der Information abgeschätzt.

Besonders günstig ist es, wenn der Information eine Qualität eines von der empfangenden Station empfangenen Signals zu wenigstens zwei Zeitpunkten entnehmbar ist. Die Qualität des empfangenen Signals ist proportional zur Feldstärke am Ort der empfangenden Station, so dass sich aus einer theoretischen Kenntnis einer Funktion, die den zeitlichen Verlauf der Feldstärke beschreibt, d. h. das elektromagnetische Feld ändert sich deterministisch, eine Schätzung des zeitlichen Verlaufs der Feldstärke am Ort der empfangenden Station aus einer den beiden Zeitpunkten jeweils zugeordneten Qualität des Signals ermitteln lässt.

Es ist von Vorteil, wenn die Antennenvorrichtung zur Erzeugung einer sich an dem Ort der empfangenden Station zeitlich ändernden Feldstärke aus wenigstens zwei räumlich getrennten Antennen besteht, die jeweils eine elektromagnetische Welle aussenden. Durch Verwendung unterschiedlicher Frequenzen für die wenigstens zwei elektromagnetischen Wellen, insbesondere durch einen Frequenzunterschied von 5 bis 50 Hertz, und/oder durch eine zeitliche Änderung der relativen Phasenlage der beiden elektromagnetischen Wellen, wird anstelle eines stationären elektromagnetischen Feldes, das beispielsweise von einer einzelnen Antenne erzeugt würde, ein so genanntes wanderndes elektromagnetisches Feld erzeugt. Der zeitliche Verlauf der Feldstärke ist somit am Ort der empfangenden Station theoretisch bekannt, d. h. die Feldstärke ändert sich deterministisch. Die Periode mit der das elektromagnetische Feld sich am Ort der empfangenden Station bzw. an jedem Ort im Funkversorgungsbereich der sendenden Station schwingt, ist festgelegt durch den Kehrwert der Frequenzdifferenz der elektromagnetischen Wellen bzw. durch diejenige Zeit, in der eine relative Phasenänderung zwischen den beiden elektromagnetischen Wellen um 360° erfolgt. Eine Periode von 50 Millisekunden ergibt sich beispielsweise bei einem Frequenzunterschied von 20 Hertz. Selbstverständlich kann ein wanderndes elektromagnetisches Feld auch mit einer Antennenvorrichtung erzeugt werden, die mehr als zwei Antennen aufweist und somit mehr als zwei elektromagnetische Wellen mit in der Antennenvorrichtung einstellbaren Frequenzen und Phasenlagen aussendet.

Weiterhin ist es von Vorteil, wenn die zu übertragenden Daten den wenigstens zwei elektromagnetischen Wellen aufmoduliert werden.

In einer bevorzugten Ausgestaltung der Erfindung ist das Funkkommunikationssystem ein Mobilfunksystem.

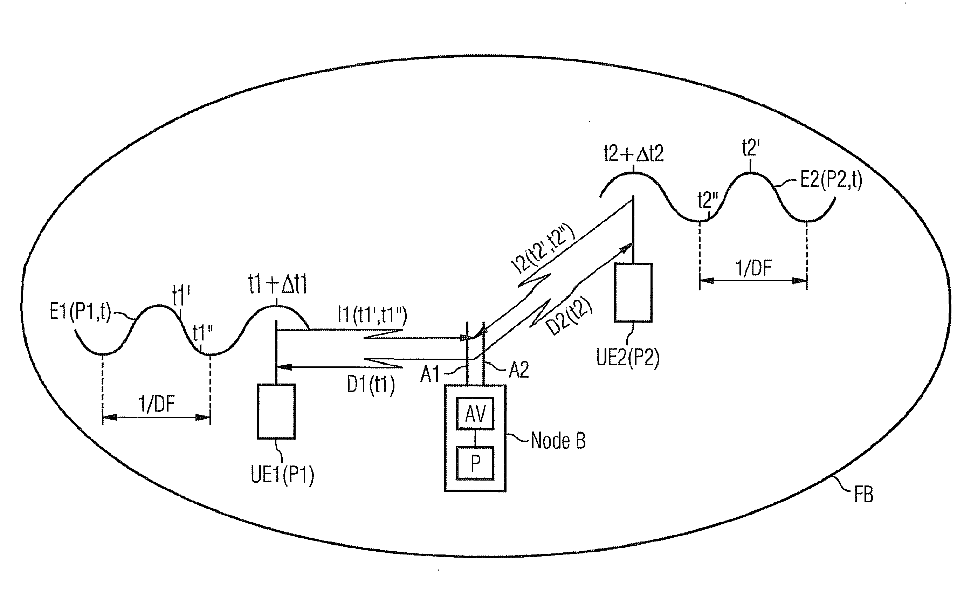

Die erfindungsgemäße sendende Station weist alle Merkmale zur Durchführung des erfindungsgemäßen Verfahrens auf. Die Erfindung wird im Folgenden anhand eines in der Figur dargestellten Ausführungsbeispiels näher erläutert.

Ohne darauf beschränkt zu sein, wird im Folgenden eine empfangende Station als Teilnehmerstation bezeichnet. Eine Teilnehmerstation ist beispielsweise ein Mobiltelefon oder auch eine ortsbewegliche oder ortsfeste Vorrichtung zur Übertragung von Bild- und/oder Tondaten, zum Fax-, Short Message Service SMS- und E-Mail-Versand und zum Internetzugang. Es handelt sich mithin um eine allgemeine Sende- und/oder Empfangseinheit eines Funkkommunikationssystems.

Ohne darauf beschränkt zu sein, wird nachfolgend eine sendende Station als Basisstation bezeichnet.

Die Erfindung kann vorteilhaft in beliebigen Funkkommunikationssystemen verwendet werden. Unter Funkkommunikationssystemen sind Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- oder dem UMTS-Standard. Auch zukünftige Mobilfunksysteme beispielsweise der vierten Generation sollen unter Funkkommunikationssystemen verstanden werden.

Im Folgenden wird die Erfindung am Beispiel eines Mobilfunksystems nach dem UMTS-Standard beschrieben, ohne jedoch darauf beschränkt zu sein.

In der Figur ist schematisch eine Basisstation NodeB dargestellt. Die Basisstation NodeB ist über nicht dargestellte Leitungen oder Funkverbindungen mittels zwischengeschalteter Stationen, beispielsweise Funknetzkontrollern (RNC: Radio Network Controller), mit einem Festnetz verbunden. Die Basisstation NodeB weist eine Antennenvorrichtung AV mit zwei Antennen A1, A2 sowie eine Steuereinheit P zur Steuerung der Antennenvorrichtung AV auf. Zur Übertragung von Daten sendet die Basisstation NodeB mit jeder der beiden Antennen A1, A2 jeweils eine elektromagnetische Welle mit einer Trägerfrequenz aus. Die Trägerfrequenzen der beiden Antennen A1, A2 unterscheiden sich beispielsweise um 5 bis 50 Hertz.

Durch den Frequenzunterschied der beiden elektromagnetischen Wellen entsteht in einem Funkversorgungsbereich FB der Basisstation NodeB anstelle eines stationären elektromagnetischen Feldes, das beispielsweise durch eine einzelne Antenne erzeugt werden kann, ein so genanntes wanderndes elektromagnetisches Feld, d. h. das elektromagnetische Feld ändert sich zeitlich an jedem Ort im Funkversorgungsbereich FB. Die Periode, mit der sich das elektromagnetische Feld an einem Ort innerhalb des Funkversorgungsbereichs FB der Basisstation NodeB ändert, entspricht dabei dem Kehrwert der Frequenzdifferenz der elektromagnetischen Wellen der beiden Antennen A1, A2.

Anstelle zweier geringfügig unterschiedlicher Trägerfrequenzen kann die Basisstation NodeB selbstverständlich die beiden Antennen A1, A2 auch mit einer gemeinsamen Trägerfrequenz betreiben. Um dann ebenfalls ein wanderndes elektrisches Feld zu erzeugen, wird die Phasenlage zwischen den elektromagnetischen Wellen der beiden Antennen A1, A2 zeitlich variiert. Eine zeitliche Änderung der Phasenlage um 7,2° pro Millisekunde ergibt beispielsweise eine Phasenänderung um 360° in 50 Millisekunden. Diese Phasenänderung ist äquivalent zu einem Frequenzunterschied der beiden elektromagnetischen Wellen von 20 Hertz bei konstanter Phasenlage.

Aufmoduliert auf die beiden Trägerfrequenzen sendet die Basisstation NodeB ein Pilotsignal, beispielsweise auf dem so genannten CPICH (Common Pilot Channel), das von allen empfangenden Stationen innerhalb des Funkversorgungsbereichs FB der Basisstation NodeB empfangen werden kann. Eine erste Teilnehmerstation UE1, die sich an einem ersten Ort P1 befindet, empfängt das Pilotsignal mit einer sich zeitlich ändernden erste Feldstärke E1. Dies ist durch die Schreibweise E1 (P1, t) dargestellt, d. h. die erste Feldstärke E1 ist eine Funktion des ersten Ortes P1 und der Zeit t. Eine zweite Teilnehmerstation UE2, die sich an einem zweiten Ort P2 befindet, empfängt ebenfalls das Pilotsignal mit einer zweiten Feldstärke E2. Die Darstellung der Orts- und Zeitabhängigkeit der zweiten Feldstärke E2 in der Figur erfolgt in gleicher Weise wie für die erste Feldstärke E1.

Der Maximalwert der beiden Feldstärken E1, E2 an den beiden Orten P1, P2 hängt von der Entfernung der ersten bzw. der zweiten Teilnehmerstation UE1, UE2 zur Basisstation NodeB sowie den Ausbreitungswegen und der Signaldämpfung der an den Orten P1, P2 eintreffenden elektromagnetischen Wellen ab. Die Periode, mit der die beiden Feldstärken E1, E2 an den beiden Orten P1, P2 schwanken, ist an beiden Orten P1, P2 gleich und entspricht dem Kehrwert der Frequenzdifferenz DF der beiden Trägerwellen. Der zeitliche Verlauf der Feldstärken E1, E2 der überlagerten Trägerwellen an den beiden Orten P1, P2 ist schematisch in der Figur dargestellt.

Die beiden Teilnehmerstationen UE1, UE2 bestimmen jeweils zu einem ersten Zeitpunkt t1', t2' und einem zweiten Zeitpunkt t1", t2" eine Qualität des empfangenen Pilotsignals. Hierbei handelt es sich beispielsweise um ein Signal- zu Rauschleistungsverhältnis. Die beiden Teilnehmerstationen UE1, UE2 schicken nachfolgend jeweils eine Information I1, I2, der die Qualität des jeweils empfangenen Pilotsignals zu jeweils den beiden Zeitpunkten t1', t1" bzw. t2', t2" entnehmbar ist, an die Basisstation NodeB. Der Basisstation NodeB ist die Frequenzdifferenz DF zwischen den beiden Antennen A1, A2 und daher die Periode bekannt, mit der sich die Feldstärke an beliebigen Orten des Funkversorgungsbereichs FB zeitlich ändert. Die Basisstation NodeB schätzt daher anhand der zu den jeweils zwei Zeitpunkten t1', t1" bzw, t2', t2" bekannten Qualität des jeweiligen Pilotsignals, den zeitlichen Verlauf der ersten Feldstärke E1 am ersten Ort P1 sowie den zeitlichen Verlauf der zweiten Feldstärke E2 am zweiten Ort P2. Nachfolgend legt die Basisstation NodeB für die erste Teilnehmerstation UE1 einen ersten Sendezeitpunkt t1 fest, zu dem sie Daten D1, beispielsweise mittels HSDPA auf einem ersten Verkehrskanal (TCH: Traffic Channel), an die erste Teilnehmerstation UE1 überträgt. Die beiden Antennen A1, A2 werden selbstverständlich mit den gleichen Trägerfrequenzen sowie dem gleichen Frequenzunterschied DF betrieben, wie zuvor zur

Übertragung des Pilotsignals auf dem CPICH. Selbstverständlich kann das Pilotsignal auch auf dem gleichen Kanal übertragen werden wie die ersten Daten D1. Beispielsweise kann in beiden Fällen der CPICH oder der erste Verkehrskanal verwendet werden. Anstatt eines Pilotsignals kann die Basisstation NodeB auch Daten auf einem Verkehrskanal an die beiden Teilnehmerstationen UE1, UE2 übertragen. Für diese Daten kann dann eine Empfangsqualität zu wenigstens zwei Zeitpunkten bestimmt werden, um nachfolgend den zeitlichen Verlauf der ersten und zweiten Feldstärke E1, E2 an den beiden Orten P1, P2 zu schätzen und jeweils Sendezeitpunkte für nachfolgende Datenübertragungen festzulegen.

Der erste Zeitpunkt t1 ist so gewählt, dass zu einem ersten Empfangszeitpunkt mit dem Wert t1 + Δt1 ein möglichst großer Wert der ersten Feldstärke E1 am ersten Ort P1 vorliegt. Idealerweise ist der Empfangszeitpunkt der Zeitpunkt, zu dem die Feldstärke am ersten Ort P1 maximal ist. In gleicher Weise wie zuvor beschrieben legt die Basisstation NodeB einen zweiten Sendezeitpunkt t2 fest, zu dem sie zweite Daten D2 an die zweite Teilnehmerstation UE2 überträgt. Die zweiten Daten D2 werden von der zweiten Teilnehmerstation UE2 zu einem zweiten Empfangszeitpunkt mit dem Wert t2 + Δt2 empfangen, zu dem am zweiten Ort P2 ebenfalls eine möglichst große zweite Feldstärke E2 vorliegt.

Durch die sich jeweils zeitlich ändernden elektromagnetischen Felder E1, E2 an den Orten P1, P2 der beiden Teilnehmerstationen UE1, UE2 ist sichergestellt, dass sich keine der beiden Teilnehmerstationen UE1, UE2 in einem permanenten Funkloch befinden kann. Weiterhin kann die Basisstation NodeB, wenn sich weitere Teilnehmerstationen in ihrem Funkversorgungsbereich FB befinden, für alle Teilnehmerstationen jeweils einen zeitlichen Verlauf der Feldstärke am jeweiligen Ort schätzen und somit die ihr verfügbaren Funkressourcen, beispielsweise die für Datenübertragungen mittels HSDPA verfügbaren Funkkanäle, gleichmäßig auf alle Teilnehmerstationen verteilen.

Funkressourcen sind beispielsweise die Sendeleistung oder Sendezeitintervalle sowie Spreizcodes und/oder Verwürflungscodes, die zur Trennung unterschiedlicher Kanäle und/oder Teilnehmerstationen auf einer Funkschnittstelle verwendet werden.

Die beiden Teilnehmerstationen aus der Figur befinden sich in diesem Ausführungsbeispiel stationär am ersten bzw. zweiten Ort P1, P2. Selbstverständlich kann die Erfindung auch dann vorteilhaft angewendet werden, wenn sich die beiden Teilnehmerstationen bewegen.

Ein weiterer Vorteil der Erfindung besteht darin, dass der gesamte Datendurchsatz aller Teilnehmerstationen im Funkversorgungsbereich FB durch die gleichmäßige Verteilung der verfügbaren Funkressourcen auf alle Teilnehmerstationen maximiert wird. Weiterhin kann die Basisstation den Sendezeitpunkt so wählen, dass die Verzögerungszeit bei der Übertragung von Datenpaketen, die durch Zwischenspeichern in der Basisstation NodeB entsteht, minimiert wird.

## Patentansprüche

1. Verfahren zur Datenübertragung von einer sendenden Station (NodeB) an eine empfangende Station (UE1, UE2) in einem Funkkommunikationssystem, bei dem
- die sendende Station (NodeB) eine Antennenvorrichtung (AV) verwendet, die ein elektromagnetisches Feld mit einer sich zeitlich ändernden Feldstärke (E1, E2) am Ort (P1, Puder empfangenden Station (UE1, UE2) erzeugt,
- die sendende Station (NodeB) für eine Datenübertragung in Abhängigkeit von dem zeitlichen Verlauf der Feldstärke (E1, E2) am Ort (P1, P2) der empfangenden Station (UE1, UE2) einen Sendezeitpunkt (t1, t2) festlegt, zu dem sie Daten (D1, D2) an die empfangende Station (UE1, UE2) überträgt,
- die sendende Station (NodeB) vor der Datenübertragung von der empfangenden Station (UE1, UE2) wenigstens eine Information (I1, I2) empfängt, anhand derer sie den zeitlichen Verlauf der Feldstärke (E1, E2) abschätzt.

2. Verfahren nach Anspruch 1, bei dem
der Information (I1, I2) eine Qualität eines von der empfangenden Station empfangenen Signals zu wenigstens zwei Zeitpunkten (t1', t1", t2', t2") entnehmbar ist.

3. Verfahren nach einem der vorstehenden Ansprüche, bei dem die Antennenvorrichtung (AV) zur Erzeugung einer sich an dem Ort (P1, P2) der empfangenden Station (UE1, UE2) zeitlich ändernden Feldstärke (E1, E2) aus wenigstens zwei räumlich getrennten Antennen (A1, A2) besteht, die jeweils eine elektromagnetische Welle aussenden.

4. Verfahren nach Anspruch 3, bei dem
die elektromagnetischen Wellen unterschiedliche Frequenzen haben.

5. Verfahren nach Anspruch 3 oder 4, bei dem
sich die Frequenzen der wenigstens zwei elektromagnetischen Wellen um 5 bis 50 Hertz unterscheiden.

6. Verfahren nach Anspruch 3, 4 oder 5, bei dem
sich die relative Phasenlage der wenigstens zwei elektromagnetischen Wellen zeitlich ändert.

7. Verfahren nach Anspruch 3, 4, 5 oder 6, bei dem
die zu übertragenden Daten (D1, D2) den wenigstens zwei elektromagnetischen Wellen aufmoduliert werden.

8. Verfahren nach einem der vorstehenden Ansprüche, bei dem das Funkkommunikationssystem ein Mobilfunksystem ist.

9. Sendende Station (NodeB)
- mit einer Antennenvorrichtung (AV) zum Erzeugen eines elektromagnetisches Feldes mit einer sich zeitlich ändernden Feldstärke (E1, E2) am Ort (P1, P2) einer empfangenden Station (UE1, UE2),
- mit einer Steuereinheit (P) zum Festlegen eines Sendezeitpunkts (t1, t2) für eine Datenübertragung in Abhängigkeit von dem zeitlichen Verlauf der Feldstärke (E1, E2) am Ort (P1, P2) der empfangenden Station (UE1, UE2), und
- mit Mitteln (AV) zum Übertragen der Daten (D1, D2) an die empfangende Station (UE1, UE2) zum Sendezeitpunkt (t1, t2), wobei die sendende Station vor der Datenübertragung von der empfangende Station (UE1, UE2) wenigstens eine Information (I1, I2) empfängt, anhand derer sie den zeitlichen Verlauf der Feldstärke (E1, E2) abschätzt.

## Claims

1. Method for data transmission from a sending station (NodeB) to a receiving station (UE1, UE2) in a radio communication system, in which
- the sending station (NodeB) uses an antenna apparatus (AV) which produces an electromagnetic field with a field strength (E1, E2) which changes over time at the location (P1, P2) of the receiving station (UE1, UE2),
- the sending station (NodeB) stipulates a sending time (t1, t2), at which it transmits data (D1, D2) to the receiving station (UE1, UE2), for a data transmission on the basis of the time profile of the field strength (E1, E2) at the location (P1, P2) of the receiving station (UE1, UE2),
- the sending station (NodeB), prior to the data transmission, receives from the receiving station (UE1, UE2) at least one piece of information (I1, I2) which it uses to estimate the time profile of the field strength (E1, E2).

2. Method according to Claim 1, in which
the piece of information (I1, I2) reveals a quality for a signal received by the receiving station at at least two times (t1', t1", t2', t2").

3. Method according to one of the preceding claims, in which
the antenna apparatus (AV) comprises at least two physically separate antennas (A1, A2), which respectively emit an electromagnetic wave, for producing a field strength (E1, E2) which changes over time at the location (P1, P2) of the receiving station (UE1, UE2).

4. Method as claimed in Claim 3, in which
the electromagnetic waves have different frequencies.

5. Method according to Claim 3 or 4, in which
the frequencies of the at least two electromagnetic waves differ by 5 to 50 hertz.

6. Method according to Claim 3, 4 or 5, in which
the relative phase of the at least two electromagnetic waves changes over time.

7. Method according to Claim 3, 4, 5 or 6, in which
the data (D1, D2) to be transmitted are modulated onto the at least two electromagnetic waves.

8. Method according to one of the preceding claims, in which
the radio communication system is a mobile radio system.

9. Sending station (NodeB)
- having an antenna apparatus (AV) for producing an electromagnetic field with a field strength (E1, E2) which changes over time at the location (P1, P2) of a receiving station (UE1, UE2),
- having a control unit (P) for stipulating a sending time (t1, t2) for a data transmission on the basis of the time profile of the field strength (E1, E2) at the location (P1, P2) of the receiving station (UE1, UE2) and
- having means (AV) for transmitting the data (D1, D2) to the receiving station (UE1, UE2) at the sending time (t1, t2), wherein the sending station, prior to the data transmission, receives from the receiving station (UE1, UE2) at least one piece of information (I1, I2) which it uses to estimate the time profile of the field strength (E1, E2).

## Revendications

1. Procédé de transmission de données d'une station émettrice (NodeB) à une station réceptrice (UE1, UE2) dans un système de radiocommunication, dans lequel
- la station émettrice (NodeB) utilise un dispositif d'antenne (AV) qui génère, sur le lieu (P1, P2) de la station réceptrice (UE1, UE2), un champ électromagnétique avec une intensité de champ (E1, E2) qui varie dans le temps,
- la station émettrice (NodeB) détermine, pour une transmission de données, en fonction du tracé temporel de l'intensité de champ (E1, E2) sur le lieu (P1, P2) de la station réceptrice (UE1, UE2), un instant d'émission (t1, t2) auquel elle transmet des données (D1, D2) à la station réceptrice (UE1, UE2),
- la station émettrice (NodeB) reçoit de la station réceptrice (UE1, UE2), avant la transmission de données, au moins une information (I1, I2) à l'aide de laquelle elle estime le tracé temporel de l'intensité de champ (E1, E2).

2. Procédé selon la revendication 1, dans lequel une qualité d'un signal reçu de la station réceptrice peut être tirée de l'information (I1, I2) à au moins deux instants (t1', t1", t2', t2").

3. Procédé selon l'une des revendications précédentes, dans lequel le dispositif d'antenne (AV) servant à générer une intensité de champ (E1, E2) qui varie dans le temps sur le lieu (P1, P2) de la station réceptrice (UE1, UE2) se compose d'au moins deux antennes (A1, A2) séparées dans l'espace, lesquelles émettent respectivement une onde électromagnétique.

4. Procédé selon la revendication 3, dans lequel les ondes électromagnétiques ont des fréquences différentes.

5. Procédé selon la revendication 3 ou 4, dans lequel les fréquences des au moins deux ondes électromagnétiques diffèrent de 5 à 50 hertz.

6. Procédé selon la revendication 3, 4 ou 5, dans lequel la position de phase relative des au moins deux ondes électromagnétiques varie dans le temps.

7. Procédé selon la revendication 3, 4, 5 ou 6, dans lequel les données à transmettre (D1, D2) sont modulées sur les au moins deux ondes électromagnétiques.

8. Procédé selon l'une des revendications précédentes, dans lequel le système de radiocommunication est un système radio mobile.

9. Station émettrice (NodeB) avec
- un dispositif d'antenne (AV) pour générer, sur le lieu (P1, P2) d'une station réceptrice (UE1, UE2), un champ électromagnétique avec une intensité de champ (E1, E2) qui varie dans le temps,
- une unité de commande (P) pour déterminer un instant d'émission (t1, t2) pour une transmission de données en fonction du tracé temporel de l'intensité de champ (E1, E2) sur le lieu (P1, P2) de la station réceptrice (UE1, UE2) et
- des moyens (AV) pour transmettre les données (D1, D2) à la station réceptrice (UE1, UE2) à l'instant d'émission (t1, t2), la station émettrice recevant de la station réceptrice (UE1, UE2), avant la transmission de données, au moins une information (I1, I2) à l'aide de laquelle elle estime le tracé temporel de l'intensité de champ (E1, E2).
